(19) Europäisches Patentamt
European Patent Office
Office européen des brevets

(11) Veröffentlichungsnummer: **0 451 809 A1**

(12) **EUROPÄISCHE PATENTANMELDUNG**

(21) Anmeldenummer: **91105676.0**

(22) Anmeldetag: **10.04.91**

(51) Int. Cl.5: **C08L 25/06**, C08L 33/06, //(C08L35/06,33:06),(C08L33/06, 25:06)

(30) Priorität: **12.04.90 DE 4011802**

(43) Veröffentlichungstag der Anmeldung: **16.10.91 Patentblatt 91/42**

(84) Benannte Vertragsstaaten: **DE ES FR**

(71) Anmelder: **RÖHM GMBH**
**Kirschenallee**
**W-6100 Darmstadt(DE)**

(72) Erfinder: **Siol, Werner, Dr.**
**Goerdelerweg 17**
**W-6100 Darmstadt-Eberstadt(DE)**
Erfinder: **Terbrack, Ulrich**
**Berliner Strasse 3**
**W-6107 Reinheim 2(DE)**

(54) **Verträgliche Polymermischungen aus Polystyrol und Polycyclopentyl(meth)acrylat.**

(57) Die Erfindung betrifft verträgliche Polymermischungen (Polymer Blends) aus einer Cyclopentyl(meth)acrylat als Monomeres enthaltenden Polymerkomponente und einer Styrol als Monomeres enthaltenden Polymerkomponente und deren technische Anwendung.

Abb. 1

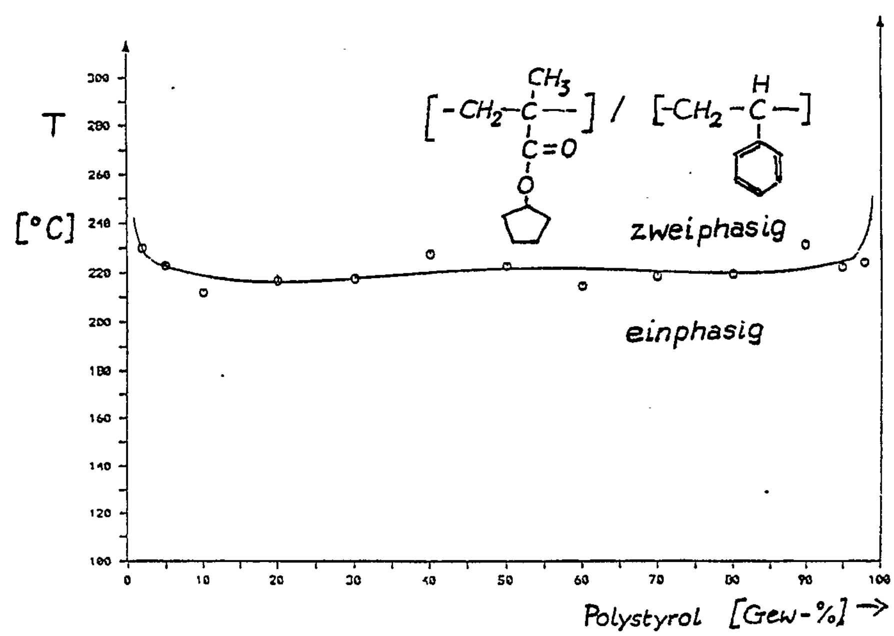


EP 0 451 809 A1

Gegenstand der Erfindung

Die Erfindung betrifft verträgliche Polymermischungen (Polymer Blends) aus einer Cyclopentyl(meth)-acrylat als Monomeres enthaltenden Polymerkomponente und einer Styrol als Monomeres enthaltenden Polymerkomponente.

Stand der Technik

In der Regel gelten unterschiedliche Polymerspecies als nicht miteinander verträglich, d.h. unterschiedliche Polymerspecies bilden bis hinab zu geringen Anteilen einer Komponente im allgemeinen keine homogene Phase aus, die durch völlige Mischbarkeit der Komponente charakterisiert wäre.
Gewisse Ausnahmen von dieser Regel haben zunehmendes Interesse speziell bei den mit der theoretischen Deutung der Phänomene befaßten Fachleute hervorgerufen. Völlig kompatible Mischungen von Polymeren zeigen völlige Löslichkeit (Mischbarkeit) in allen Mischungsverhältnissen.
Eine zusammenfassende Darstellung über mischbare Polymersysteme findet sich z.B. bei D.R. Paul et al. in Polymer & Engineering Science 18, (16) 1225 - 34 (1978); J. Macromol. Sci.-Rev. Macromol. Chem. C. 18 (1) 109 - 168 (1980).
Zum Nachweis der Mischbarkeit wurde häufig die Glastemperatur Tg oder die sogenannte "Optische Methode" (Klarheit eines aus homogener Lösung des Polymergemischs gegossenen Films) herangezogen. (Vgl.Brandrup-Immergut, Polymer Handbook, 2. Ed., II-211-213). Als ein weiterer Test auf die Mischbarkeit von unter sich verschiedenen Polymeren wird das Auftreten der unteren kritischen Lösungstemperatur (Lower Critical Solution Temperature = LCST) bewertet. (Vgl. DE-A 34 36 476.5 und DE-A 34 36 477.3). Das Auftreten der LCST beruht auf dem Vorgang, daß sich beim Erwärmen die bis anhin klare, homogene Polymermischung in Phasen auftrennt und optisch trübe bis opak wird. Dieses Verhalten stellt nach der Literatur einen eindeutigen Beweis dafür dar, daß die ursprüngliche Polymermischung aus einer einzigen, im Gleichgewicht befindlichen homogenen Phase bestanden hatte.
Neuere Ergebnisse über "Polymer Blends" und mögliche Anwendung derselben werden von L.M. Robeson in Polym. Engineering & Science 24 (8), 587 - 597 berichtet. Copolymere aus Styrol und Maleinsäureanhydrid sowie aus Styrol und Acrylnitril sind unter gewissen Voraussetzungen mit Polymethylmethacrylat (PMMA) verträglich (DE-A 20 24 940). Hervorgehoben wurden die verbesserten Gebrauchseigenschaften von Formmassen dieser Typen. Ebenso sind Copolymere aus Styrol und zur Wasserstoffbrückenbindung befähigten Hydroxylgruppenhaltigen Monomeren bei bestimmter Zusammensetzung mit Polymethacrylaten verträglich, so z.B. Copolymere aus Styrol und p-(2-Hydroxylhexafluoroisopropyl)styrol [B.Y. Min and Eli M. Pearce, Organic Coatings and Plastics Chemistry, 45, (1981) 58 - 64, oder Copolymere aus Styrol und Allylalkohol (F. Cangelose and M.T. Shaw. Polymer Preprints (Am. Chem. Soc., Div. Polym. Chem.) 24, (1983), 258 - 259].
Polystyrol selbst sowie andere Styrol enthaltende Polymere gelten hingegen als mit Polymethylmethacrylat unverträglich. So wird von Shaw, M.T. and Somani, R.H. eine Mischbarkeit von nur, 3,4 ppm (PMMA mit einem Molekulargewicht von 160 000) bzw. von 7,5 ppm (PMMA mit einem Molekulargewicht von 75 000) mit Polystyrol angegeben [Adv. Chem. Ser. 1984, 206 (Polym. Blends Compos. Multiphase Syst.), 33 - 42] (CA 101 : 73417 e). Sogar sehr niedermolekulares Polystyrol ist mit PMMA wenig verträglich. So ergibt bereits eine Mischung aus 20 % eines extrem niedermolekularen Styrol-Oligomeren (Mw : 3 100) kein klares Produkt mehr. Bei einem ebenfalls noch sehr niedrigen Molekulargewicht von 9 600 ist sogar eine nur 5 %-ige Lösung von Polystyrol in PMMA nur noch translucent. [Raymond R. Parent and Edward V. Tompson, Journal of Polymer Science: Polymer Physics Edition, Vol. 16, 1829 bis 1847 (1978)].
Ebensowenig sind andere Polymethacrylate und Polyacrylate mit Polystyrol zu transparenten Kunststoffen abmischbar. Dies gilt z.B. für Polyethylacrylat (PEA), Polybutylmethacrylat, Polyisobutylmethacrylat, Polyneopentylmethacrylat, Polyhexylmethacrylat und viele andere. Vgl. auch R.H. Somani and M.T. Shaw, Macromolecules 14, 1549 - 1554 (1981).
Dagegen haben sich hinwiederum Mischungen aus einer Cyclohexyl(meth)acrylat als Monomeres enthaltenden Polymerkomponente und einer Styrol als Monomeres enthaltenden Polymerkomponente als verträglich erwiesen (Vgl. EP-A 0 268 040).
Ebenso ist Polystyrol verträglich mit Copolymeren aus Methylmethacrylat bzw. Ethylmethacrylat und Alkylmethacrylaten mit 3 - 24 Kohlenstoffatomen im Alkylrest, sofern diese Copolymeren zu 30 - 90 Gew.-% aus Ethylmethacrylat bzw. Methylmethacrylat und 70 - 10 Gew.-% aus dem $C_3$-$C_{24}$-Alkylmethacrylat aufgebaut sind. (DE-OS 37 30 025.3) Homopolymere wie Polymethylmethacrylat oder Polyethylmethacrylat oder Homo-Alkylmethacrylat $C_3$-$C_{24}$ sind danach nicht mit Polystyrol verträglich (DE-OS 37 30 025.3).
Andererseits sind bestimmte alkylsubstituierte Polystyrole mit bestimmten Polyalkylmethacrylaten verträglich (siehe DE-OS 36 38 443.7). Als Beispiel sind dort Poly-t-butylstyrol und Poly-3,3,5-Trimethylcyclohexylmethacrylat genannt. Verträglichkeit wurde auch gefunden bei Mischungen aus Polystyrol und Poly(meth)-acrylsäureestern von substituierten Heterocyclen mit 5 - 8 Ringatomen, sofern diese Heterocyclen wenigstens 2 Heteroatome im Ring aufweisen (DE-OS 38 18 837.6).
Der Stand der Technik erweist somit die Richtigkeit der herrschenden Auffassung verträgliche Polymermischungen betreffend, daß nämlich Unterträglichkeit unter sich die Regel, Verträglichkeit aber die Ausnahme darstelle und daß die gegenwärtig vorhandene theoretische Durchdringung des Phänomens "Polymerverträglichkeit" eine gesicherte Voraussage nicht gestatte.
Mechanische Abmischungen von Polymeren (Polyblends) haben in bestimmten Fällen auf bestimmten Gebieten der Kunststoffindustrie zu eingenschaftsmäßig verbesserten Kunststoffprodukten geführt (vgl. Kirk-Othmer, 3rd. Ed., Vol. 18, pp. 443 - 478, J. Wiley 1982). Die physikalischen Eigenschaften solcher "Polyblends" stellen gewöhnlich einen Kompromiß dar, der alles in allem eine Verbesserung gegenüber den Eigenschaften der individuellen Polymeren bedeuten kann.
In der Regel waren es jedoch **multiphasische** Polymermischungen, die eine gewisse kommerzielle Bedeutung erlangt haben und nicht die wenigen bekannten verträglichen Mischungen (vgl. Kirk-Othmer loc.cit., pg. 449).
Ein besonders interessanter Fall einer multiphasischen Polymermischung sind Abmischungen aus PVC bzw. Polystyrol oder Polycarbonat oder SAN mit einem zweiphasig aufgebauten Pfropfpolymeren, das zu 10 - 80 Gew.-% aus einem Copolymeren aus Methylmethacrylat und 90 - 20 Gew.-% aus einem Elastomeren besteht, wobei das Methylmethacrylatcopolymere zwischen 5 und 50 Gew.-% eines Cycloalkyl(meth)acrylates enthält. All diese Mischungen zeigen ausgezeichnete Schlagzähigkeit (DE-OS 37 43 199.4).

Aufgabe und Lösung

Multiphasische und verträgliche Polymermischungen sind somit sowohl hinsichtlich ihrer physikalischen als auch ihrer anwendungstechnisch relevanten, insbesondere ihrer optischen Eigenschaften (Transparenz, Klarheit usw.) streng auseinanderzuhalten. Wie bereits ausgeführt, setzt öfters mangelnde Verträglichkeit einem sinnvollen Abmischen von Kunststoffen mit dem Ziel, dadurch ein verbessertes Gesamt-Eigenschaftsspektrum zu erreichen, enge Grenzen. Dies schien auch für die beiden Polymerklassen der Polystyrole und der Polyalkyl(meth)acrylate zuzutreffen. [Vgl. W.A. Kruse et al. Makromol. Chem. 177, 1145 (1976), sowie R.H. Somani and M.T. Shaw. Macromolecules 14, 1549 bis 1554 (1981)]. Es wurde nun gefunden, daß überraschenderweise Mischungen aus Polystyrolen und Polycyclopentylmethacrylat oder Polycyclopentylacrylat miteinander verträglich sind. Die vorliegende Erfindung betrifft daher verträgliche Polymermischungen PM aus zwei verschiedenen Polymerkomponenten

A) 0,1 bis 99,9 Gew.-% eines Polymeren P1, das zu wenigstens 20 Gew.-% aus Monomeren der Formel I

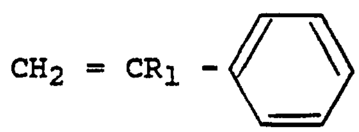

I

(= Polymer P1) und

B) 99,9 bis 0,1 Gew.-% eines Poly(meth)acrylats das zu mindestens 10 Gew.-% aus den Monomeren der Formel II

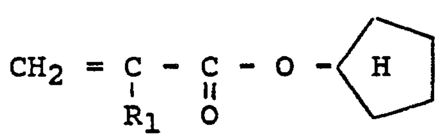

II

worin $R_1$ für Wasserstoff oder Methyl steht, mit der Maßgabe, daß der Cyclopentylrest mit $C_1$-$C_4$-Alkylresten substituiert sein kann, aufgebaut ist (= Polymer P2).

Vorzugsweise macht die Summe der Polymerkomponente A) plus B) einhundert Prozent der gesamten Polymeren in der Mischung PM aus, wobei die Polymermischung PM jedoch im weiteren unter Umständen

anstelle eines einheitlichen Polymeren eingesetzt, d.h. in Kombination mit weiteren Polymeren verarbeitet werden kann.

Die Verträglichkeit der erfindungsgemäß herzustellenden Abmischungen aus dem Polymeren P1 gemäß A) und dem Poly(meth)acrylat P2 gemäß B) war nicht vorherzusehen angesichts des Fehlens einer allgemein anerkannten theoretischen Grundlage für die Kompatibilität von Hochpolymeren. Es sei daran erinnert, daß z.B. Poly-n-Phenylacrylate bzw. -methacrylate keine Verträglichkeit mit den Polymeren P1 aufweisen.

Nach vorliegenden Befunden ist die Verträglichkeit der aus A) und B) gebildeten Mischungen sogar so gut, daß bei einer Temperatur von 200 Grad C und darüber keine Entmischung eintritt. Besonders erwähnt seien die Polymermischungen aus Polystyrol als Polymerkomponente A) und Polycyclopentylacrylat oder Polycyclopentylmethacrylat als Polymerkomponente B) (= Polymermischung PM1) Die ausgezeichnete Verträglichkeit dieser Polymermischung PM1 läßt eine weitgehende Variationsbreite zu sowohl hinsichtlich des Mischungsverhältnisses als auch der Mischungspartner. Dies gilt insbsondere für reines Polystyrol als Polymer P1. So ist es einerseits möglich, die Polymerkomponente B) durch Polymerisation mit geeigneten Monomeren weitgehend zu variieren.

Andererseits läßt sich auch die Polymerkomponente A) im gewissen Rahmen durch Copolymerisation mit geeigneten Monomeren verändern, ohne daß die Verträglichkeit verloren geht. Geeignete Comonomere für die Komponente B) sind Acryl- bzw. Methacrylsäureester, im allgemeinen solche von nicht alicyclischen Alkoholen mit 1 - 12 Kohlenstoffatomen, insbesondere Alkanolen, daneben Acryl- und Methacrylsäureester von gegebenenfalls substituierten cyclischen Alkoholen mit 4, 7, 8, 9, 10, 11 oder 12 Kohlenstoffatomen im Ring sowie Acryl- und Methacrylsäureester von substituierten Cyclohexanolen. Ganz besonderes Interesse als Comonomere finden die Acrylsäureester mit 1 - 8 Kohlenstoffatomen sowie Methacrylsäureester mit 3 - 12 Kohlenstoffatomen.

Des weiteren kommen andere mit Cyclopentyl(meth)acrylat copolymerisierbare Monomere als Comonomere in Frage. So sind insbesondere in Anteilen von 1 - 29 Gew.-% Methylmethacrylat und Ethylmethacrylat von Interesse. Der Anteil von Cyclopentylacrylat und/oder Cyclopentylmethacrylat am Gehalt der Polymerkomponente B) liegt in der Regel im Bereich 100 - 10 Gew.-%, besonders bevorzugt im Bereich von 95 - 20 Gew.-% und ganz besonders bevorzugt im Bereich von 80 - 20 Gew.-%. Besonderes Interesse finden Polymere, die 71 - 100 Gew.-% Cyclopentyl(meth)acrylat enthalten und 0 - 29 Gew.-% Methylmethacrylat bzw. Ethylmethacrylat. Ebenso ist nach vorliegenden Befunden ein wechselseitiger Ersatz der unter der allgemeinen Formel II einerseits bzw. der unter der allgemeinen Formel III gemäß Anspruch 10 andererseits zulässigen Monomeren untereinander möglich. So kann wie aus der Formel I hervorgeht Styrol im Polymerisat A) durch $\alpha$-Methylstyrol substituiert werden, vorzugsweise zu einigen Gew.-%, z.B. 10 Gew.-%. Darüber hinaus ist im gewissen Umfang ein Austausch des Styrols durch andere alkylsubstituierte Styrole wie beispielsweise m-Methylstyrol, p-tert. Butyl-Styrol, p-Methylstyrol möglich. In der Regel ist der Anteil an diesen Monomeren kleiner als 20 Gew.-%. Ebenso kann das Styrol durch Ester der Acrylsäure und der Methacrylsäure teilweise ersetzt werden. Ferner kann das Styrol in untergeordneter Menge durch andere Vinylverbindungen, insbesondere Vinylester ersetzt werden, wie z .B. Vinylacetat und Vinylpropionat. Dabei ist darauf zu achten, daß der Styrol- bzw. $\alpha$-Methylstyrol-Gehalt an der Polymerkomponente A) wenigstens 20 Gew.-%, bevorzugt jedoch wenigstens 50 Gew.%, besonders bevorzugt wenigstens 90 Gew.-% und ganz besonders bevorzugt wenigstens 99 Gew.-% ausmacht. Besonders bevorzugt besteht Polymerkomponente A) zu wenigstens 99 Gew.-% aus Styrol. Während die Polymerkomponente A) mit anderen hydrophoben Vinylverbindungen also weitestgehend modifiziert werden kann, ist der Anteil an sehr polaren Monomeren, wie z.B. Acrylnitril, Maleinsäure-anhydrid, Maleinsäureimiden, p-(2-Hydroxylhexafluorosiopropyl)styrol oder Allylalkohol sehr begrenzt. Der Anteil dieser polaren Monomeren sollte unter 10 Gew.-%, bzw. unter 5 Gew.-% an der Polystyrolkomponente A) betragen. Besonders bevorzugt sind solche Polymere A), die weniger als 0,1 Gew.-% dieser polaren Monomeren enthalten.

Gleichermaßen kann im Polymerisat B) das Cyclopentylmethacrylat durch Cyclopentylacrylat ersetzt werden.

Die Variationen werden sich dabei in aller Regel nach den Erfordernissen des jeweiligen Einsatzgebietes richten. So wird der Cyclopentylacrylat- und/oder der Cyclopentylmethacrylatgehalt eines Polymeren B), das in hohen Gewichtsanteilen beispielsweise zur Modifizierung des Brechungsindex im reinen Polystyrol eingesetzt werden soll, höher sein, in der Regel deutlich größer als 20 Gew.-% oder bevorzugt deutlich größer als 30 Gew.-%, als der Cyclopentyl(meth)acrylatgehalt eines Polymeren B), das mit Polymeren A) beispielsweise nur bei Raumtemperatur verträglich sein soll, bei erhöhter Temperatur jedoch wieder Phasentrennung (also Unverträglichkeit) aufweisen soll.

In der Regel ist eine Verträglichkeit der Polymeren A) mit den Polymeren B) auch dann noch gegeben, wenn auch das Polymere A) Cyclopentyl(meth)acrylat und/oder das Polymere B) auch Styrol enthält. Dabei ist der Styrolgehalt des Polymeren A) jedoch deutlich höher als der Styrolgehalt des Polymeren B). In der

Regel ist die Differenz des Styrolgehalts (Gew.-% Styrol in Polymer A) minus Gew.-% Styrol im Polymer B) größer als 10 Gew.-%, bevorzugt größer als 30 Gew.-%, besonders bevorzugt größer als 50 Gew.-% und ganz besonders bevorzugt größer als 90 Gew.-%. Ebenso ist der Cyclopentyl(meth)acrylatgehalt des Polymeren B) deutlich höher als der Cyclopentyl(meth)acrylatgehalt des Polymeren A). So enthält Polymer A) in der Regel weniger als 5 Gew.-% Cyclopentyl(meth)acrylat, bevorzugt weniger als 0,1 Gew.-%. Für den Fall, daß auch Polymer A) Cyclopentyl(meth)acrylat enthält, gilt, daß der Quotient: (Gehalt an Cyclopentyl-(meth)acrylat in Polymer B) / Gehalt an Cyclopentyl(meth)acrylat in Polymer A) > 2, bevorzugt > 5 und ganz besonders bevorzugt > 10 ist.
Ferner gilt, daß der Gehalt an Monomeren der Formel I im Polymer P2 und der Gehalt an Styrol bzw. α-Methylstyrol im Polymeren P1 vor allem dann gering sein kann, wenn die übrigen Monomerbausteine im Polymer P1 und im Polymer P2 chemisch weitgehend übereinstimmen.
Ganz besonders bevorzugt ist die Polymermischung, die als Polymerkomponente A) reines Polystyrol und als Polymerkomponente B) ein Polymeres mit 71 - 100 Gew.-% Cyclopentyl(meth)acrylat enthält.

Die **Charakterisierung** der erfindungsgemäßen Polymermischungen PM als **verträgliche** Mischungen erfolgt nach den anerkannten Kriterien (vgl. Kirk-Othmer, loc.cit., pp. 457 - 460, Vol. 18).

a) Bei Anwendung optischer Verfahren beobachtet man bei den erfindungsgemäßen Polymermischungen PM einen **einzigen Brechungsindex**, der zwischen denen der beiden Polymerkomponenten A) und B) liegt.

b) Die Polymermischungen PM besitzen eine einzige Glasübergangstemperatur Tg (die zwischen der der Polymerkomponenten liegt).

Herstellung der Polymerisate A) und B)

Die Herstellung der Polymerisate A) und B) kann nach den bekannten Regeln der Polymerisation und nach bekannten Verfahren erfolgen. Die Polymeren vom Typ A) können z.B. nach Houben-Weyl, Methoden der organischen Chemie, 4. Auflage, Bd. XIV/1, pp 761 - 841, Georg Thieme-Verlag (1961) hergestellt werden. Sie sind auch in geeigneter Form im Handel erhältlich. Dabei kann vorzugsweise das radikalische, aber auch ionische Polymerisationsverfahren zur Anwendung kommen. Die Molgewichte M der erfindungsgemäß eingesetzten Polymeren A) liegen in der Regel oberhalb von 3 000, bevorzugt im Bereich von 5 000 bis 1 000 000, besonders bevorzugt im Bereich 20 000 bis 500 000. (Bestimmung durch Lichtstreuung). Es sei indessen betont, daß die Molgewichte die Eignung als Komponente in den verträglichen Polymermischungen PM nicht kritisch zu beeinflussen scheinen. Dies gilt sowohl für die Homo- als auch die Copolymerisate der Typen A) und B). Für eine Verträglichkeit von Polymer P1 und Polymer P2 ist die Taktizität der Polymeren von gewisser Bedeutung. In der Regel ist insbesondere ein Polymeres P2 mit einem geringen Anteil an isotaktischen Triaden (wie es beispielsweise durch radikalische Polymerisation erhalten wird) gegenüber Polymeren mit einem hohen isotaktischen Anteil, wie es durch spezielle ionische Polymerisation erzeugt wird, bevorzugt.
Die Herstellung der Homo- bzw. Copolymerisate B) erfolgt nach bekannten Verfahren. (Vgl. H. Rauch-Puntigam, Th. Völker Acryl- und Methacrylverbindungen, Springer-Verlag 1967). Wenn auch prinzipiell eine Herstellung durch anionische Polymerisation oder Group-Transfer-Polymerisation [siehe auch O.W. Webster et al., J. Am. Chem. Soc., 105, 5706 (1983)] möglich ist, so ist doch die bevorzugte Herstellungsform die radikalische Polymerisation.

Die Molgewichte M der Polymerisate B) liegen in der Regel oberhalb von 3 000 im allgemeinen im Bereich von 10 000 bis 1 000 000, vorzugsweise 20 000 bis 300 000 (Lichtstreuung). Bei der Auswahl der Monomerkomponenten, die als Comonomere bei B) eingesetzt werden sollen, ist darauf zu achten, daß die Glastemperatur Tg des resultierenden Polymerisats die technische Anwendbarkeit des Gesamtsystems PM nicht einschränkend beeinflußt. So soll für die Herstellung von Formkörpern aus der Polymermischung PM wenigstens eines der Polymeren P1 und P2 eine Glastemperatur Tg > 70 Grad C aufweisen, bevorzugt ist für diese Anwendung, daß auch die Polymermischung PM eine Glastemperatur Tg > 70 Grad C aufweist. Diese Einschränkung gilt bevorzugt für die Herstellung von spritzgegossenen, gepreßten bzw. extrudierten Gegenständen aus der Polymermischung PM. Für andere Anwendungsgebiete, beispielsweise für Lacke, für Elastomere oder für eine reversible thermotrope Verglasung (Polymermischung mit Trübungspunkt beim Erwärmen) also für eine Anwendung gemäß DE-A 34 36 477.3, sind jedoch solche Polymermischungen PM bevorzugt, die eine Polymerkomponente P2 mit einer Glastemperatur T < 40 Grad C oder bevorzugt < 20 Grad C aufweisen.

Herstellung der Mischungen PM

Die verträglichen Mischungen PM können durch die unterschiedlichen Verfahren hergestellt werden, sie werden z.B. durch intensives mechanisches Vermischen der Komponenten A) und B) in der Schmelze, im Extruder usw. erzeugt; oder sie können auch aus einem gemeinsamen Lösungsmittel heraus als sogenannte "solution cast polyblends" hergestellt werden. (Vgl. Kirk-Othmer "Encyclopedia of Chemical Technology" 3rd. Ed. Vol. 18, pg. 443 - 478, J. Wiley, 1982). Auch kann so vorgegangen werden, daß Polymer A) in der Monomermischung des anderen Polymeren B) aufgelöst wird und anschließend in Gegenwart von Polymer A) erzeugt wird. Umgekehrt kann natürlich auch Polymer A) in Gegenwart des Polymeren B) erzeugt werden. Ebenso kann die Polymermischung PM aus gemeinsamen Fällungsmitteln erzeugt werden. Der Mischungsart sind keine Grenzen gesetzt.
Man erzeugt in der Regel zunächst Mischungen der Komponenten A) und B) wobei vorteilhaft von Feststoffen in Form beispielsweise eines Perlpolymerisats oder eines Granulats ausgegangen wird unter Verwendung langsam laufender Mischaggregate wie z.B. Trommel-, Rhönrad-, Doppelkammer-Pflugscharmischern. Die langsam laufenden Mischaggregate verursachen ein mechanisches Mischen, ohne daß die Phasengrenzen aufgehoben werden. (Vgl. Ullmanns Encyklopädie der Technischen Chemie, 4. Auflage, Bd. 2, pg. 282 - 311, Verlag Chemie). Anschließend erfolgt die thermoplastische Aufarbeitung durch homogenes Mischen in der Schmelze unter Verwendung von heizbaren Mischaggregaten bei den dafür geeigneten Temperaturen, z.B. 150 bis ca. 300 Grad C in Knetern oder vorzugsweise Extrudern, z.B. Ein- oder Mehrschneckenextrudern oder gegebenenfalls in Extrudern mit oszillierender Schnecke und Scherstiften (z.B. im BUSSCO-Kneter).

Man kann nach diesen Verfahren Gleichkorngranulate (z.B. Heißabschlag, Würfelform, Rundkorn) herstellen. Die Korngröße der Granulate liegt dabei im Bereich 2 bis 5 mm. Eine weitere, einfache Methode zur Erzeugung der Polymerverbindungen PM ist das Abmischen von Polymerdispersionen (enthaltend die Polymerkomponente A) und Polymerdispersionen, (enthaltend die Polymerkomponente B). Diese Dispersionsmischungen können gemeinsam koaguliert werden, gemeinsam sprühgetrocknet werden oder gemeinsam auf einem Extruder abgequetscht werden. Andererseits können die Dispersionsmischungen auch gemeinsam zu einem Film aufgetrocknet werden.

Vorteilhafte Wirkungen der Mischungen PM

Die erfindungsgemäßen verträglichen Polymermischungen PM weisen inbesondere die nachfolgenden Vorteile auf, die die entsprechenden technischen Einsatzmöglichkeiten nahelegen wobei "Polystyrol" bzw. "Polycyclopentyl(meth)acrylat" jeweils stellvertretend für die unter die Polymeren A) bzw. B) fallenden Möglichkeiten aufgeführt sei.

1) Zunächst sind die Polymermischungen - im Unterschied zu Mischungen aus anderen Poly(meth)-acrylaten und Polystyrolen - verträglich. D.h. die erfindungsgemäßen Polymermischungen sind im nicht pigmentierten Zustand im Unterschied zu nicht verträglichen Polystyrol/Poly(meth)acrylatabmischungen glasklar (sie zeigen keine Lichtstreuung, d.h. in der Regel ist der Haze < 10 %). Erfindungsgemäß sind aber auch solche Mischungen, die nur bei Raumtemperatur verträglich sind, bei Temperaturerhöhung jedoch Entmischung zeigen.

2. Mischungen aus Polystyrolen und Polycyclopentyl(meth)acrylaten zeigen wie Polystyrole und Polycyclopentylacrylate bzw. -methacrylate selbst eine geringe Wasseraufnahme.

3. Durch Abmischen mit Polycyclopentyl(meth)acrylat läßt sich die Doppelbrechung des Polystyrols reduzieren. Die beidem vorgenannten Eigenschaften qualifizieren die erfindungsgemäßen Polymermischungen PM speziell als Datenspeichermaterial, insbesondere für optisch ablesbare Informationsträger. [Vgl. J. Hennig, Kunststoffe 75, pg. 425 (1985)].

4. Durch Abmischen mit Polycyclopentyl(meth)acrylat kann auch der Brechungsindex des Polystyrols reduziert werden. Beispielsweise kann Polystyrol durch Abmischen mit Polycyclopentyl(meth)acrylat im Brechungsindex so verändert werden, daß der Brechungsindex der Polystyrol/Polycyclopentyl(meth)-acrylatmischung dem Brechungsindex einer eingelagerten Gummiphase angepaßt wird. Auf diesem Weg kann man transparente, schlagzähe Kunststoffe erhalten.

Besonderes Interesse finden auch Polymerkompositionen, die zu ca. 40 - 99 Gew.-%, bevorzugt 70 - 95 Gew.-% aus der Polymermischung PM und zu 60 - 1 Gew.-%, bevorzugt 30 - 5 Gew.-% aus einem weiteren von P1 und P2 chemisch unterscheidbaren Polymeren P2 besteht, wobei gilt, daß Polymer P3 mit Polymer P1, P2 und mit der Mischung PM unverträglich ist.
In der Regel wird dabei die Zusammensetzung der Polymermischung PM so gewählt, daß der Brechungsindex des Polymeren P3 mit dem Brechungsindex der Mischung PM übereinstimmt, in der Regel soll also bei Raumtemperatur gelten:

$|n_D^{25}{}_{PM} - n_D^{25}{}_{P3}| < 0,01$

In der Regel wird das mit PM unverträgliche Polymere P3 eine Tg < 20 Grad C aufweisen und wenigstens teilweise mit wenigstens einem der Bestandteile der Polymermischung PM, also mit P1 oder P2, kovalent verknüpft sein. Darüber hinaus kann das Polymere P3 vernetzt sein.
Ganz besonders bevorzugt ist der Fall, daß das Polymer P3 Polybutadien oder Polyisopren ist.

Polymerkompositionen, aufgebaut aus 40 - 99 Gew.-% PM und 1 - 60 Gew.-% P3 zeichnen sich, insbesondere wenn P3 eine Tg < 20 Grad C aufweist, durch eine im Vergleich zu reinem PM verbesserte Schlagzähigkeit aus.

Insbesondere gestatten Polymerkompositionen aus 40 - 99 Gew.-% PM und 60 - 1 Gew.-% P3 eine einfache Schlagzähabmischung von Polymeren P2. So kann gegebenenfalls sprödes P2 durch Abmischen mit handelsüblichen, schlagzäh ausgerüstetem P1 (z.B. Styrol-Butydien Blockcopolymere) zu einer hoch schlagzähen, klaren PM/P3-Polymerkomposition abgemischt werden.
Besonderes Interesse gilt solchen Polymermischungen, die als Polymere P2 Polymere mit 51 - 100 Gew.-% Cyclopentyl(meth)acrylat enthalten.
5) Durch Umhüllung von Polystyrol mit Polycyclopentyl(meth)acrylat ist die Herstellung einer optischen Gradientenfaser möglich:
Dabei erhält man folgende Daten:

**Kern:** Polystyrol Brechungsindex $n_D = 1,59$
**Mantel:** Polycyclopentyl(meth)acrylat $n_D = 1,51$
In der Regel wird man als Mantel - schon wegen der hohen Sprödigkeit von Polycylclopentyl-methacrylat - Cyclopentyl(meth)acrylat-haltige Copolymere (z.B. mit MMA) verwenden, wodurch der Brechungsindex des Mantels noch niedriger wird.
**Übergang:** Kontinuierlich

Derartige Fasern können z.B. als Lichtleitkabel Verwendung finden.
6) Gegenstände aus Polystyrol mit einem dünnen Mantel aus Polycyclopentyl(meth)acrylat, insbesondere aus einem Polycyclopentyl(meth)acrylat mit (einpolymerisiertem) UV-Absorber sind zugänglich. Im Gegensatz zu nicht umhülltem Polystyrol sind solche Gegenstände witterungsstabil. Das ansonsten gravierende Problem der Wiederverwendung heterogen beschichteter Kunststoffabfälle entfällt, da Abfälle aufgrund der guten Verträglichkeit wieder eingearbeitet werden können. In der Regel werden die Gegenstände aus Polystyrol bzw. aus der Polymerverbindung PM durch Spritzen, Pressen, Extrudieren, Walzen oder Gießen hergestellt. Der Mantel aus Polymer P2 wird in der Regel durch Lackieren oder durch Coextrudieren aufgebracht.
7) Platten aus Polystyrol mit einem Überzug aus Polycyclopentyl(meth)acrylat lassen sich herstellen. Platten mit einem derartigen Aufbau weisen gegenüber unbehandelten Polystyrolplatten eine um ca. 2 % verbesserte Lichtdurchlässigkeit auf. In der Regel weisen Platten mit einem Überzug aus Polycyclopentyl(meth)acrylat auch eine bessere Kratzfestigkeit und eine veränderte Korrosionsbeständigkeit auf. Besonders interessant sind Mehrfachstegplatten, wie sie beispielsweise zum Verglasen von Gewächshäusern eingesetzt werden, die aus Polystyrol oder einer Polymermischungen PM hergestellt worden sind und einen Überzug aus einem Cyclopentyl(meth)acrylat-haltigen Polymeren (= Polymer P2) aufweisen. (DE-A 16 09 777) Weiter können Verklebungen von Polystyrolen mit dem Polymer P2 oder vorteilhaft mit Cyclopentylacrylat enthaltenden Monomeren/Initiator-Mischungen durchgeführt werden. Hier kann die hohe Polymerisationsgeschwindigkeit der Acrylate mit der guten Polymerverträglichkeit kombiniert werden.
8) Verarbeitungstechnische Vorteile resultieren bei der Anwendung von Mischungen PM aus > 90 Gew.-% Polystyrol und < 10 Gew.-% Polycyclopentyl(meth)acrylat. In diesem Falle übernimmt das Poly-(meth)acrylat die Funktion eines Verarbeitungshilfsmittels.

9) Aus Polystyrol/Polycyclopentyl(meth)acrylatmischungen lassen sich transparente Formkörper gewinnen, die an der Oberfläche durch Energieeinwirkung, z.B. geeignete Strahlung so modifiziert worden sind, daß das Poly(meth)acrylat abgebaut worden ist, das Polystyrol jedoch nicht. (Formkörper mit reflexmindernder Oberfläche, Resists).

Die folgenden Beispiele dienen zur Erläuterung der Erfindung.

Die Bestimmung der reduz. Viskosität ($\eta$) erfolgt in Anlehnung an DIN 1342, DIN 51562 und DIN 7745.

BEISPIELE

Beispiel 1

Synthese der Polycyclopentylmethacrylate

100 g Cyclopentylmethacrylat werden mit 0,1 g t-Butylperneodecanoat,0,1 g t-Butyl-per-octoat und 0,3 g Dodecylmercaptan versetzt. Die Lösung wird in einen Folienschlauch gefüllt und 24 Stunden bei 40 Grad C, dann 24 Stunden bei 60 Grad C im Wasserbad polymerisiert. Anschließend wird noch 24 Stunden in einem Trockenschrank bei 90 Grad C getempert.

Nach Entfernen der Folie enthält man ein glasklares Polymerisat, das in Essigester und Toluol löslich ist.

Molekulargewicht der Polymeren: J = 43,2 ml/g

Dieses Polymere wird zu einer 20 %igen Lösung in Toluol gelöst. Ebenso wird Polystyrol (J = 61 ml/g) zu einer 20 %igen Lösung in Toluol gelöst.

Diese Lösungen werden im Verhältnis

| | |
|---|---|
| 2 / 98 | 60 / 40 |
| 5 / 95 | 70 / 30 |
| 10 / 90 | 80 / 20 |
| 20 / 80 | 90 / 10 |
| 30 / 70 | 95 / 5 |
| 40 / 60 | 98 / 2 |
| 50 / 50 | |

gemischt. Die Lösungen werden zunächst bei Raumtemperatur zu Filmen aufgetrocknet, die anschließend 24 Stunden bei 50 Grad C im Vacuum nachgetrocknet werden. Es resultieren in allen Mischungsverhältnissen glasklare Filme, die beim Erwärmen auf ca. 220 Grad C entmischen. (Siehe Abb. 1)

## Patentansprüche

1. Verträgliche Polymermischungen PM aus zwei Polymerkomponenten

A) 0,1 bis 99,9 Gew.-% eines Polymeren P1, das zu wenigstens 20 Gew.-% aus Monomeren der Formel I

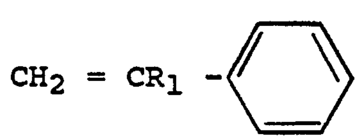

I

worin $R_1$ für Wasserstoff oder Methyl steht, und

B) 99,9 bis 0,1 Gew.-% eines Polymeren P2, das zu mindestens 10 Gew.-% aus den Monomeren der Formel II

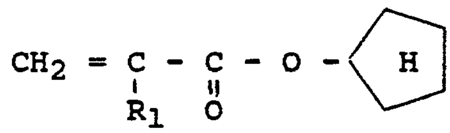 II

worin $R_1$ für Wasserstoff oder Methyl steht, mit der Maßgabe, daß der Cyclopentylrest mit $C_1$-$C_4$-Alkylresten substituiert sein kann, aufgebaut ist.

2. Verträgliche Polymermischungen PM aus zwei Polymerkomponenten gemäß Anspruch 1, dadurch gekennzeichnet, daß die Polymerkomponente P1 zu wenigstens 50 Gew.-% aus Styrol aufgebaut ist.

3. Verträgliche Polymermischungen PM aus zwei Polymerkomponenten gemäß den Ansprüchen 1 und 2, dadurch gekennzeichnet, daß die Polymerkomponente P1 zu wenigstens 90 Gew.-% aus Styrol aufgebaut ist.

4. Verträgliche Polymermischungen PM aus zwei Polymerkomponenten gemäß den Ansprüchen 1 - 3, dadurch gekennzeichnet, daß die Polymerkomponente P1 zu wenigstens 99 Gew.-% aus Styrol aufgebaut ist.

5. Verträgliche Polymermischungen PM aus zwei Polymerkomponenten gemäß den Ansprüchen 1 - 4 dadurch gekennzeichnet, daß die Polymerkomponente P2 zu 20 - 90 Gew.-% aus Monomeren der Formel II aufgebaut ist.

6. Verträgliche Polymermischungen PM aus zwei Polymerkomponenten gemäß den Ansprüchen 1 - 3, dadurch gekennzeichnet, daß die Polymerkomponente P2 zu 51 - 100 Gew.-% aus den Monomeren der Formel II aufgebaut ist.

7. Verträgliche Polymermischungen PM gemäß den Ansprüchen 1 - 4, dadurch gekennzeichnet, daß die Polymerkomponente P2 zu 51 - 100 Gew.-% aus Cyclopentyl(meth)acrylat aufgebaut ist.

8. Verträgliche Polymermischungen PM aus zwei Polymerkomponenten gemäß den Ansprüchen 1 - 4, dadurch gekennzeichnet, daß die Polymerkomponente P2 zu 10 - 90 Gew.-% aus einem $C_1$-$C_8$-Alkylacrylat (ausgenommen Monomere der Formel II) und 90 - 10 Gew.-% aus den Monomeren der Formel II aufgebaut ist.

9. Verträgliche Polymermischungen PM gemäß Anspruch 1, dadurch gekennzeichnet, daß die Polymerkomponente P1 zu 90 - 100 Gew.-% aus Styrol und die Polymerkomponente P2 zu 51 - 100 Gew.-% aus Monomeren der Formel II aufgebaut sind.

10. Verträgliche Polymermischung PM gemäß Anspruch 1, dadurch gekennzeichnet, daß die Polymerkomponente P1 zu 1 - 20 Gew.-% aus einem Monomeren der Formel III

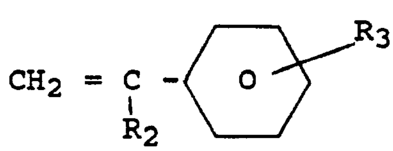 III

worin $R_2$ für Wasserstoff oder Methyl und $R_3$ für einen Alkylrest $C_nH_{2n+1}$ mit $n = 1 - 8$ steht, aufgebaut ist.

11. Verträgliche Polymermischungen PM gemäß den Ansprüchen 1 - 10, dadurch gekennzeichnet, daß der Gehalt an polaren Monomeren ausgewählt aus der Gruppe (Meth)acrylnitril, Maleinsäureanhydrid, Maleinsäureimide, p-(2-Hydroxyhexafluoroisopropyl)styrolan der Polymerkomponente P1 < 5 Gew.-% ausmacht.

12. Verträgliche Polymermischungen PM gemäß den Ansprüchen 1 - 11, dadurch gekennzeichnet, daß die Mischung aus 10 - 99 Gew.-% Polymer P1 und 90 - 1 Gew.-% Polymer P2 aufgebaut ist.

13. Verträgliche Polymermischungen PM gemäß den Ansprüchen 1 - 12, dadurch gekennzeichnet, daß die Mischung aus 50 - 90 Gew.-% Polymer P1 und 50 - 10 Gew.-% Polymer P2 aufgebaut ist.

14. Verträgliche Polymermischungen PM gemäß den Ansprüchen 1 - 12, dadurch gekennzeichnet, daß die Mischung aus 20 - 80 Gew.-% Polymer P1 und 80 - 20 Gew.-% Polymer P2 aufgebaut ist.

15. Verträgliche Polymermischungen PM gemäß den Ansprüchen 1 - 14, dadurch gekennzeichnet, daß wenigstens eines der Polymeren P1 und P2 eine Glastemperatur Tg > 70 Grad C aufweist.

16. Verträgliche Polymermischungen PM gemäß den Ansprüchen 1 - 14, dadurch gekennzeichnet, daß die Polymermischung PM eine Glastemperatur Tg > 70 Grad C aufweist.

17. Verträgliche Polymermischung PM gemäß den Ansprüchen 1- 14, dadurch gekennzeichnet, daß die Polymerkomponente P2 eine Glastemperatur Tg < 40 Grad C aufweist.

18. Verträgliche Polymermischungen PM gemäß Anspruch 17, dadurch gekennzeichnet, daß die Polymerkomponente P2 eine Glastemperatur < 20 Grad C aufweist.

19. Verträgliche Polymermischung gemäß den Ansprüchen 1 - 18, dadurch gekennzeichnet, daß die Polymermischung PM beim Erwärmen einen Trübungspunkt zeigt.

20. Verträgliche Polymermischung PM gemäß den Ansprüchen 1 - 19, dadurch gekennzeichnet, daß die Polymermischung einen Trübungspunkt > 25 Grad C aufweist.

21. Verträgliche Polymermischung PM gemäß Anspruch 20, dadurch gekennzeichnet, daß die Polymermischung einen Trübungspunkt > 60 Grad C aufweist.

22. Verträgliche Polymermischung PM gemäß Anspruch 21, dadurch gekennzeichnet, daß die Polymermischung einen Trübungspunkt > 180 Grad C aufweist.

23. Verträgliche Polymermischung PM gemäß den Ansprüchen 1 - 22, dadurch gekennzeichnet, daß das Molekulargewicht MW des Polymeren P1 und des Polymeren P2 > 3 000 beträgt.

24. Verträgliche Polymermischung PM gemäß den Ansprüchen 1 - 22, dadurch gekennzeichnet, daß wenigstens eines der beiden Polymeren P1 und P2 ein Molekulargewicht MW > 5 000 aufweist.

25. Verträgliche Polymermischung PM gemäß den Ansprüchen 1 - 22, dadurch gekennzeichnet, daß wenigstens eines der beiden Polymeren ein Molekulargewicht MW im Bereich 5 000 - 1 000 000 aufweist.

26. Verträgliche Polymermischung PM gemäß den Ansprüchen 1 - 22, dadurch gekennzeichnet, daß sowohl Polymer P1 als auch Polymer P2 ein Molekulargewicht MW im Bereich 20 000 - 500 000 aufweisen.

27. Verträgliche Polymermischung PM gemäß den Ansprüchen 1 - 26, dadurch gekennzeichnet, daß die Lichtdurchlässigkeit (gemessen an einer 3 mm dicken Probe) > 88 % beträgt.

28. Verträgliche Polymermischung PM gemäß den Ansprüchen 1 - 27, dadurch gekennzeichnet, daß der Haze < 10 % beträgt.

29. Polymerkomposition aus 40 -99 Gew.-% der Polymermischung PM gemäß den Ansprüchen 6 - 9 und 60 - 1 Gew.-% eines weiteren von P1 und P2 chemisch unterscheidbaren Polymeren P3, das mit P1, P2 und PM unverträglich ist.

30. Polymerkomposition gemäß Anspruch 29, dadurch gekennzeichnet, daß der Brechungsindex der

Polymermischung PM ($n_{DPM}$) bei Raumtemperatur mit dem Brechungsindex des Polymeren P3 ($n_{DP3}$) übereinstimmt, so daß gilt:$|n_D^{25}{}_{PM} - n_D^{25}{}_{P3}| < 0,01$.

**31.** Polymerkomposition gemäß den Ansprüchen 29 und 30, dadurch gekennzeichnet, daß die Glastemperatur Tg der Polymeren P3 < 20 Grad C liegt.

**32.** Polymerkomposition gemäß den Ansprüchen 29 - 31, dadurch gekennzeichnet, daß das Polymere P3 wenigstens teilweise mit den Polymeren P1 und/oder P2 kovalent verknüpft ist.

**33.** Polymerkompositionen gemäß den Ansprüchen 29 - 32, dadurch gekennzeichnet, daß das Polymere P3 vernetzt ist.

**34.** Polymerkompositionen gemäß den Ansprüchen 29 - 33, dadurch gekennzeichnet, daß das Polymere P3 Polybutadien oder Polyisopren ist.

**35.** Gegenstände aus den verträglichen Polymermischungen gemäß den Ansprüchen 1 - 34.

**36.** Gegenstände aus der verträglichen Polymermischung PM gemäß den Ansprüchen 1 - 34 mit einem Überzug aus Polymer P2.

**37.** Witterungsbeständige Gegenstände gemäß Anspruch 36, dadurch gekennzeichnet, daß das Polymer P2 einen gegebenenfalls einpolymerisierten UV-Absorber in Anteilen von 0,1 - 20 Gew.-% (bezogen auf das Polymer P2) enthält.

**38.** Spritzgegossene Formkörper gemäß den Ansprüchen 35 - 37.

**39.** Extrudierte Formkörper gemäß den Ansprüchen 35 - 37.

**40.** Verwendung der verträglichen Polymermischungen gemäß den Ansprüchen 1 - 34 zur Herstellung von Datenspeicherplatten, insbesondere für optisch ablesbare Information.

**41.** Verwendung der verträglichen Polymermischungen gemäß Anspruch 1 zur Herstellung von optischen Gradientenfasern mit einem Kern aus Polymer P1 und einer Hülle aus Polymer P2 und einer Zwischenschicht aus einer verträglichen Polymermischung.

**42.** Verwendung der verträglichen Polymermischungen gemäß den Ansprüchen 19 - 22 zur Herstellung von thermotropen Schutzverglasungen, enthaltend eine Polymermischung PM gemäß den Ansprüchen 19 - 22.

**43.** Lösungen von Polymermischungen PM gemäß Anspruch 1.

**44.** Polymerfilm aus Lösungen gemäß Anspruch 43.

**45.** Kunststoffdispersionen, enthaltend nebeneinander Latices aus Polymer P1 und Polymer P2.

**46.** Filme aus Kunststoffdispersionen gemäß Anspruch 45.

Abb. 1

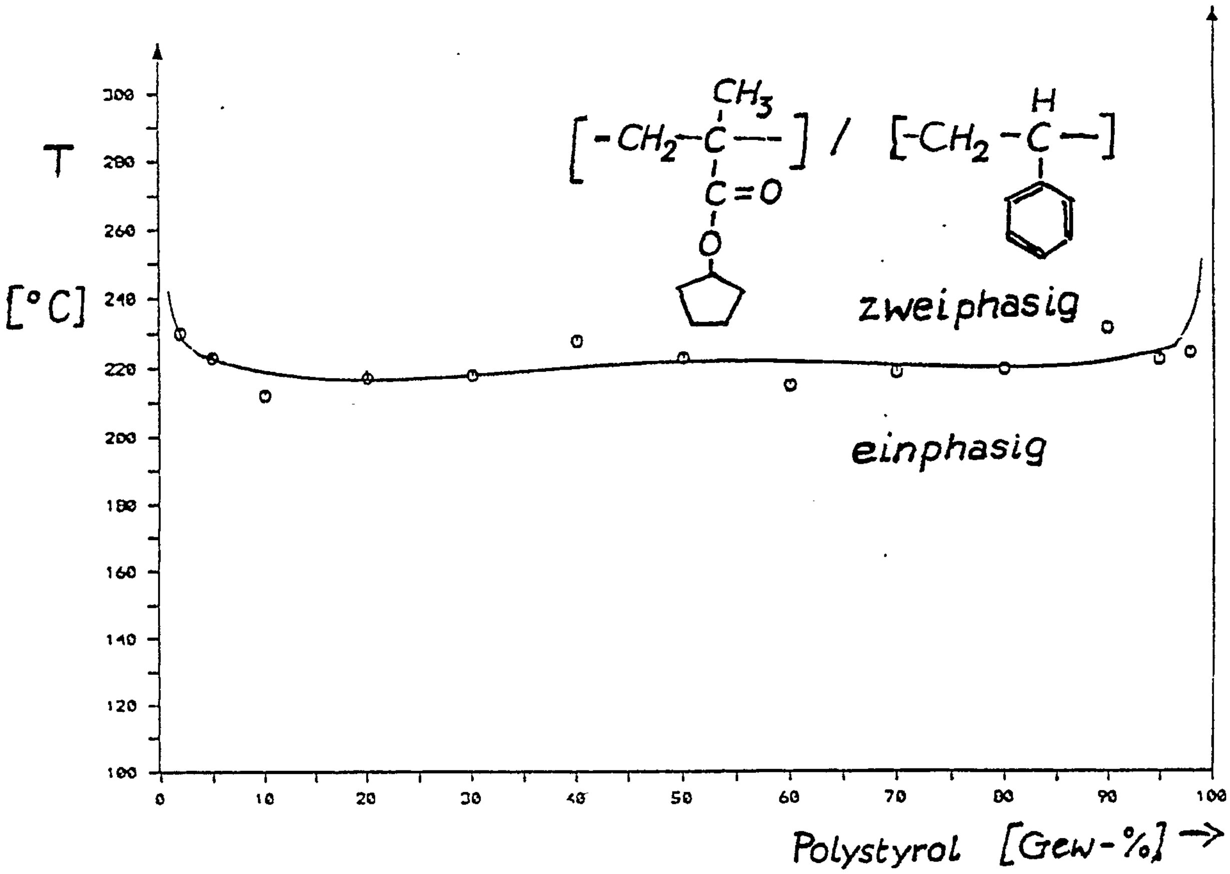
T
[°C]
300
280
260
240
220
200
180
160
140
120
100
0
10
20
30
40
50
60
70
80
90
100
zweiphasig
einphasig
Polystyrol [Gew-%]

Europäisches Patentamt

# EUROPÄISCHER RECHERCHENBERICHT

Nummer der Anmeldung

**EP 91 10 5676**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | EP-A-0 268 168 (RÖHM GMBH)<br>* Ansprüche *<br>– – – | 1-46 | C 08 L 25/06<br>C 08 L 33/06 //<br>(C 08 L 35/06<br>C 08 L<br>C 08 L 33:06 )<br>(C 08 L 33/06<br>C 08 L<br>C 08 L 25:06 ) |
| A | EP-A-0 360 137 (BASF AKTIENGESELLSCHAFT)<br>* Seite 2, Zeilen 50 - 54; Ansprüche *<br>– – – – – | 1 | |

| RECHERCHIERTE SACHGEBIETE (Int. Cl.5) |
|---|
| C 08 L |

Der vorliegende Recherchenbericht wurde für alle Patentansprüche erstellt

| Recherchenort | Abschlußdatum der Recherche | Prüfer |
|---|---|---|
| Den Haag | 12 Juli 91 | DE LOS ARCOS Y VELAZ |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument